# EUROPÄISCHE PATENTSCHRIFT

(11) **EP 3 464 892 B1**
(45) Veröffentlichungstag und Bekanntmachung des Hinweises auf die Patenterteilung: **16.02.2022**
(21) Anmeldenummer: 17725158.4
(22) Anmeldetag: 28.04.2017
(51) Int. Cl.: F03D 13/20, F03D 13/25

(54) **WINDENERGIEANLAGE MIT TURM MIT AERODYNAMISCHEM PROFIL**
WIND TURBINE WITH TOWER WITH AN AERODYNAMIC PROFILE
ÉOLIENNE AVEC UNE TOUR AVEC UN PROFIL AÉRODYNAMIQUE

(30) Priorität: 03.06.2016 DE 102016110295
(43) Veröffentlichungstag der Anmeldung: 10.04.2019
(73) Patentinhaber: aerodyn consulting Singapore pte ltd, Singapore 188024 (SG)
(72) Erfinder: SIEGFRIEDSEN, Sönke, 24768 Rendsburg (DE)
(74) Vertreter: Lobemeier, Martin Landolf
(86) Internationale Anmeldenummer: PCT/DE2017/100355
(87) Internationale Veröffentlichungsnummer: WO 2017/206977

(56) Entgegenhaltungen:
- CN-B- 103 291 551
- DE-A1-102010 037 706
- KR-A- 20120 099 891
- US-A1- 2011 058 944
- US-A1- 2016 075 413

## Beschreibung

Die Erfindung betrifft eine Windenergieanlage mit einem ein aerodynamisches Profil mit einem spiegelsymmetrischen Querschnitt aufweisenden Turm.

Allgemein ist für Windenergieanlagen mit einem guten Leistungsbeiwert in der Rotorauslegung und -fertigung darauf zu achten, dass Profilform und Oberflächenrauigkeit zu möglichst geringen Widerstandskräften führen. Für moderne Windenergieanlagen werden daher für die Rotorblätter tropfenförmige Profile verwendet, die hinsichtlich ihrer Gleitzahl optimiert sind.

Aus der DE 10 2010 037 706 A1 ist aber auch bekannt, den Turm einer Windenergieanlage als im Querschnitt tropfenförmig ausgestaltetes Profil auszubilden, um den Einfluss der durch einen als Rundturm ausgebildeten Mast hervorgerufenen Windstau, Windschatten oder Verwirbelungen zu minimieren.

Weiter ist aus der von der Anmelderin eingereichten, als WO 2016/000681 A1 veröffentlichten Patentanmeldung hingegen bekannt, das aerodynamische Profil eines Turms zur Windnachführung einer schwimmenden Windenergieanlage zu nutzen. Dieses Profil kann tropfenförmig, aber auch linsenförmig ausgebildet sein.

Weitere im Zusammenhang mit Windenergieanlagen stehende Profile sind insbesondere aus der US 2016/075413 A1, der US 2011/058944 A1, der KR 2012 0099891 A und der CN 103 291 551 B bekannt.

Wenngleich nun ein tropfenförmiges Profil als Rotorblatt aufgrund der verwendeten Materialien relativ einfach herzustellen ist, gestaltet sich die Fertigung eines Turms oder eines schwimmenden Fundaments aufgrund der Verwendung von Stahlteilen sehr arbeitsaufwändig und kostenintensiv.

Insbesondere bei aus Stahl gefertigten Rundtürmen von Windenergieanlagen wird die gewünschte Form üblicherweise mithilfe von Rundbiegemaschinen gefertigt, wobei die Fertigung von tropfenförmigen Profilen mit einem Übergang einer runden Form in eine spitz auslaufende Fahne nur sehr aufwändig und durch Implementieren mehrerer aufeinander folgender Arbeitsschritte zu bewerkstelligen ist.

Aufgabe der Erfindung ist es daher, eine Windenergieanlage mit einem ein aerodynamisches Profil mit einem spiegelsymmetrischen Querschnitt aufweisenden Turm zu schaffen, wobei das Profil einem tropfenförmigen oder linsenförmigen Profil ähnliche Eigenschaften aufweist, aber einfach zu fertigen ist.

Diese Aufgabe wird erfindungsgemäß durch die Windenergieanlage mit den Merkmalen von Anspruch 1 gelöst. Die abhängigen Ansprüche geben vorteilhafte Ausgestaltungen der Erfindung wieder.

Der Grundgedanke der Erfindung ist es, das aerodynamische Profil aus mehreren Abschnitten zu fertigen, die sich in ihrem Biegeradius unterscheiden und somit einzeln angefertigt und anschließend zu einem einem Tropfenprofil ähnelnden Profil miteinander verbunden werden können.

Der Vorteil der Erfindung bei Verwendung als Windenergieanlagenkomponente ist, dass die Schublast und die Nachlaufströmung geringer sind.

Erfindungsgemäß ist also ein aerodynamisches Profil mit einem spiegelsymmetrischen Querschnitt vorgesehen, wobei das Profil aus einem mittig zur Symmetrieachse angeordneten rundgebogenen ersten Abschnitt gebildet ist, der mit seinem einen freien Ende direkt mit einem freien Ende eines rundgebogenen zweiten Abschnitts mit seinem anderen freien Ende direkt mit einem freien Ende eines rundgebogenen dritten Abschnitts verbunden ist, wobei das jeweils andere freie Ende des zweiten Abschnitts und des dritten Abschnitts direkt miteinander verbunden sind, sodass ein geschlossenes aerodynamisches

Profil gebildet ist, wobei der Biegeradius des ersten Abschnitts kleiner als die Biegeradien des zweiten und dritten Abschnitts ist. Die Symmetrieachse entspricht in diesem Fall auch der Längsachse des Profils.

Bevorzugt sind die Abschnitte - wie bei Rundtürmen von Windenergieanlagen bekannt - aus Stahl gefertigt.

Weiter bevorzugt sind der zweite Abschnitt und der dritte Abschnitt identisch ausgebildet und spiegelbildlich zueinander angeordnet, sodass der Arbeitsaufwand für die Fertigung des erfindungsgemäßen Profils bevorzugt vermindert ist.

Im Übrigen ist der Querschnitt des ersten Abschnitts, des zweiten Abschnitts und/oder des dritten Abschnitts als solches spiegelsymmetrisch ausgebildet, sodass auch die Fertigung der Abschnitte keine besonders aufwändigen Arbeiten erfordert.

Weiter ist bevorzugt vorgesehen, dass der zweite Abschnitt und der dritte Abschnitt in der Symmetrieachse des Profils miteinander verbunden sind.

Sind die Abschnitte einzeln aus Stahl gefertigt, sind diese besonders bevorzugt miteinander verschweißt. Alternativ können die Abschnitte jeweils an deren Enden Flansche aufweisen, an den denen die Abschnitte miteinander verschraubt sind.

Insbesondere ist der zwischen dem zweiten Abschnitt und dem dritten Abschnitt gebildete Winkel kleiner als der Mittelpunktswinkel des ersten Abschnitts, sodass das Profil auf seiner einen Seite rundlich und auf seiner gegenüberliegenden Seite spitz ausgeführt ist.

Das aerodynamische Profil weist speziell ein Verhältnis von Länge zu Breite im Bereich von 1:0,4 bis 1:0,7 auf.

Wird das aerodynamische Profil als Turm einer schwimmenden Windenergieanlage verwendet, ist es vorteilhaft, die schwimmende Windenergieanlage als Lee-Läufer auszugestalten, wobei das Turmprofil die Windnachführung zumindest unterstützen, wenn nicht sogar bewirken kann.

Die Erfindung wird im Folgenden anhand von in den beigefügten Abbildungen dargestellten, besonders bevorzugt ausgestalteten Ausführungsbeispielen näher erläutert. Dabei zeigen:
- Fig. 1: den Querschnitt durch ein erstes Ausführungsbeispiel eines aerodynamischen Profils;
- Fig. 2: den Querschnitt durch ein zweites Ausführungsbeispiel eines aerodynamischen Profils; und
- Fig. 3: den Querschnitt durch ein drittes Ausführungsbeispiel eines aerodynamischen Profils.

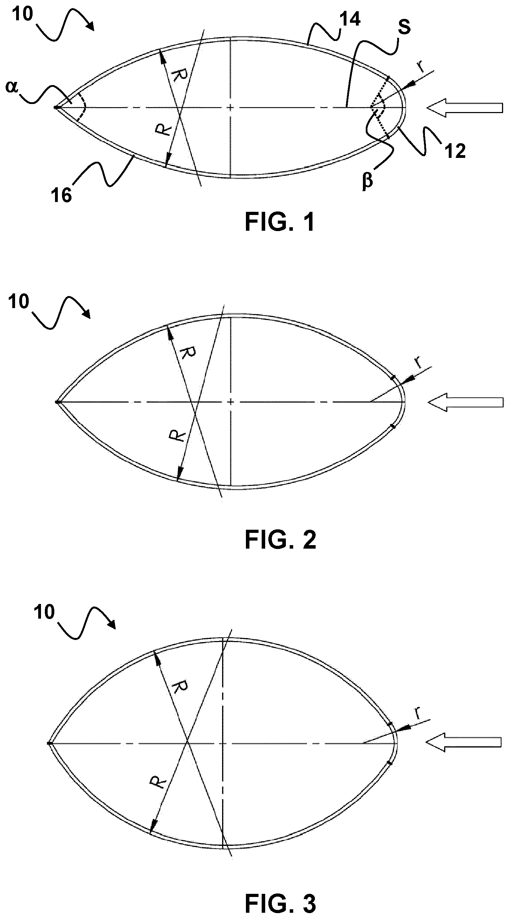

Fig. 1 zeigt einen Querschnitt durch ein erstes Ausführungsbeispiel eines aerodynamischen Profils.

Das aerodynamische Profil 10 ist aus einem mittig zur Symmetrieachse S angeordneten rundgebogenen ersten Abschnitt 12 gebildet, der mit seinem einen freien Ende direkt mit einem freien Ende eines rundgebogenen zweiten Abschnitts 14 und mit seinem anderen freien Ende direkt mit einem freien Ende eines rundgebogenen dritten Abschnitts 16 verbunden ist. Das jeweils andere freie Ende des zweiten Abschnitts 14 und des dritten Abschnitts 16 sind direkt miteinander insbesondere durch Schweißen verbunden, sodass ein geschlossenes Stahlprofil erhalten wird.

Erfindungsgemäß ist der Biegeradius r des ersten Abschnitts 12 kleiner als die Biegeradien R des zweiten und dritten Abschnitts 14, 16, sodass ein technisch leicht zu fertigendes Profil 10 gebildet werden kann, dass annähernd tropfenförmig ist.

Insbesondere weist das in Fig. 1 dargestellte Profil 10 ein Verhältnis von dessen Länge zu dessen Breite von 1 : 0,4 auf.

Bei Verwendung des Profils 10 als Turm einer Windenergieanlage ist vorgesehen, dass der Turm bzw. das Profil 10 so ausgerichtet ist, dass die Anströmung aus Richtung des in Fig. 1 dargestellten Pfeils erfolgt.

Fig. 2 zeigt einen Querschnitt durch ein zweites Ausführungsbeispiel eines aerodynamischen Profils, das in seinem Aufbau grundsätzlich dem für Fig. 1 beschriebenen Aufbau folgt.

Abweichend von dem in Fig. 1 dargestellten Ausführungsbeispiel weist das in Fig. 2 dargestellte Profil 10 ein Verhältnis von dessen Länge zu dessen Breite von 1 : 0,5 auf.

Fig. 3 zeigt einen Querschnitt durch ein drittes Ausführungsbeispiel eines aerodynamischen Profils mit dem Unterschied, dass das in Fig. 3 dargestellte Profil 10 ein Verhältnis von dessen Länge zu dessen Breite von 1 : ~0,67 aufweist.

## Patentansprüche

1. Windenergieanlage mit einem ein aerodynamisches Profil (10) mit einem spiegelsymmetrischen Querschnitt aufweisenden Turm, wobei
das Profil (10) aus einem mittig zur Symmetrieachse (S) angeordneten rundgebogenen ersten Abschnitt (12) gebildet ist, der mit seinem einen freien Ende direkt mit einem freien Ende eines rundgebogenen zweiten Abschnitts (14) und mit seinem anderen freien Ende direkt mit einem freien Ende eines rundgebogenen dritten Abschnitts (16) verbunden ist, wobei das jeweils andere freie Ende des zweiten Abschnitts (14) und des dritten Abschnitts (16) direkt miteinander verbunden sind, sodass
ein geschlossenes aerodynamisches Profil gebildet ist, wobei der Biegeradius des ersten Abschnitts (12) kleiner als die Biegeradien des zweiten und dritten Abschnitts (14, 16) ist.

2. Windenergieanlage nach Anspruch 1, **dadurch gekennzeichnet, dass** die Abschnitte (12, 14, 16) aus Stahl gefertigt sind.

3. Windenergieanlage nach einem der vorhergehenden Ansprüche, **dadurch gekennzeichnet, dass** der zweite Abschnitt (14) und der dritte Abschnitt (16) identisch ausgebildet und spiegelbildlich zueinander angeordnet sind.

4. Windenergieanlage nach einem der vorhergehenden Ansprüche, **dadurch gekennzeichnet, dass** der Querschnitt des ersten Abschnitts (12), des zweiten Abschnitts (14) und/oder des dritten Abschnitts (16) spiegelsymmetrisch ausgebildet ist.

5. Windenergieanlage nach einem der vorhergehenden Ansprüche, **dadurch gekennzeichnet, dass** der zweite Abschnitt (14) und der dritte Abschnitt (16) in der Symmetrieachse (S) des Profils (10) miteinander verbunden sind.

6. Windenergieanlage nach einem der vorhergehenden Ansprüche, **dadurch gekennzeichnet, dass** die Abschnitte (12, 14, 16) miteinander verschweißt sind.

7. Windenergieanlage nach einem der vorhergehenden Ansprüche, **dadurch gekennzeichnet, dass** der zwischen dem zweiten Abschnitt (14) und dem dritten Abschnitt (16) gebildete Winkel (a) kleiner als der Mittelpunktswinkel (ß) des ersten Abschnitts (12) ist.

8. Windenergieanlage nach einem der vorhergehenden Ansprüche, **dadurch gekennzeichnet, dass** das Profil (10) ein Verhältnis von Länge zu Breite im Bereich von 1 :0,4 bis 1 :0,7 aufweist.

## Claims

1. Wind turbine comprising a tower having an aerodynamic profile (10) with a mirror-symmetrical cross section, wherein the profile (10) is formed from a curved first portion (12) which is arranged centrally with respect to the axis of symmetry (S) and which is connected at one free end directly to a free end of a curved second portion (14) and is connected at its other free end directly to a free end of a curved third portion (16), wherein the other free ends of the second portion (14) and of the third portion (16) in each case are connected directly to one another, so that a closed aerodynamic profile is formed, wherein the bending radius of the first portion (12) is smaller than the bending radii of the second and third portions (14, 16).

2. Wind turbine according to claim 1, **characterized in that** the portions (12, 14, 16) are made of steel.

3. Wind turbine according to either of the preceding claims, **characterized in that** the second portion (14) and the third portion (16) are identical and are arranged in mirror symmetry with respect to one another.

4. Wind turbine according to any of the preceding claims, **characterized in that** the cross section of the first portion (12), the second portion (14) and/or the third portion (16) is mirror-symmetrical.

5. Wind turbine according to any of the preceding claims, **characterized in that** the second portion (14) and the third portion (16) are connected to one another in the axis of symmetry (S) of the profile (10).

6. Wind turbine according to any of the preceding claims, **characterized in that** the portions (12, 14, 16) are welded to one another.

7. Wind turbine according to any of the preceding claims, **characterized in that** the angle (a) formed between the second portion (14) and the third portion (16) is smaller than the central angle (β) of the first portion (12).

8. Wind turbine according to any of the preceding claims, **characterized in that** the profile (10) has a length to width ratio in the range of from 1:0.4 to 1:0.7.

## Revendications

1. Éolienne comportant une tour comportant un profilé (10) aérodynamique comportant une section transversale à symétrie en miroir, dans laquelle le profilé (10) est formé d'une première section (12) incurvée disposée au centre d'un axe de symétrie (S), laquelle est directement reliée, par l'intermédiaire d'une extrémité libre, à une extrémité libre d'une deuxième section (14) incurvée, et, par l'intermédiaire de son autre extrémité libre, à une extrémité libre d'une troisième section (16) incurvée, dans laquelle les autres extrémités libres respectives de la deuxième section (14) et de la troisième section (16) sont directement reliées l'une à l'autre de telle sorte qu'un profilé aérodynamique fermé est formé, dans laquelle le rayon de courbure de la première section (12) est inférieur aux rayons de courbure des deuxième et troisième sections (14, 16).

2. Éolienne selon la revendication 1, **caractérisée en ce que** les sections (12, 14, 16) sont en acier.

3. Éolienne selon l'une quelconque des revendications précédentes, **caractérisée en ce que** la deuxième section (14) et la troisième section (16) sont conçues de manière identique et sont disposées en miroir l'une par rapport à l'autre.

4. Éolienne selon l'une quelconque des revendications précédentes, **caractérisée en ce que** la section transversale de la première section (12), de la deuxième section (14) et/ou de la troisième section (16) est à symétrie en miroir.

5. Éolienne selon l'une quelconque des revendications précédentes, **caractérisée en ce que** la deuxième section (14) et la troisième section (16) sont reliées l'une à l'autre dans l'axe de symétrie (S) du profilé (10).

6. Éolienne selon l'une quelconque des revendications précédentes, **caractérisée en ce que** les sections (12, 14, 16) sont soudées les unes aux autres.

7. Éolienne selon l'une quelconque des revendications précédentes, **caractérisée en ce que** l'angle (a) formé entre la deuxième section (14) et la troisième section (16) est inférieur à l'angle au centre (β) de la première section (12).

8. Éolienne selon l'une quelconque des revendications précédentes, **caractérisée en ce que** le profilé (10) présente un rapport de la longueur à la largeur dans la plage comprise entre 1:0,4 et 1:0,7.
